# EUROPÄISCHE PATENTANMELDUNG

(11) **EP 1 266 858 A2**
(43) Veröffentlichungstag der Anmeldung: **18.12.2002**
(21) Anmeldenummer: 02011800.6
(22) Anmeldetag: 28.05.2002
(51) Int. Cl.: B66B 1/34

(54) **Einrichtung zur Positionserfassung**

(30) Priorität: 15.06.2001 DE 10129044
(71) Anmelder: K.A. SCHMERSAL GmbH & Co., D-42279 Wuppertal (DE)
(72) Erfinder: Hoepken, Hermann, 45549 Sprockhövel (DE)
(74) Vertreter: Sparing - Röhl - Henseler Patentanwälte

(57) **Zusammenfassung**

Die Erfindung betrifft eine Einrichtung zur Positionserfassung eines längs eines vertikalen Schachtes (1) beweglichen, stromversorgten Aufzugkorbs (2), mit einem im Schacht (1) lotrecht gespannten Schallsignalleiter (3) mit vorbestimmter, im wesentlichen gleichmäßiger Schallausbreitungsgeschwindigkeit sowie mit einem mit einem Signalgeber (8) verbundenen, an dem Aufzugkorb (2) befindlichen Signaleinkoppler (9) zum Einkoppeln eines Schallsignals in den Schallsignalleiter (3), wobei benachbart zu einem Ende des Schallsignalleiters (3) ein Signalauskoppler (10) angeordnet ist, der mit einer Auswerteschaltung (11) zur Erzeugung eines für die momentane Position des Aufzugkorbs (2) repräsentativem Signal verbunden ist, und wobei der Schallsignalleiter (3) an einem Ende einen Schallsignaldämpfer (6, 6') aufweist, wobei der einen eigenen Taktgenerator umfassende Signalgeber (8) und der Signaleinkoppler (9) durch die Energieversorgung (13) des Aufzugkorbs (2) energieversorgt sind und die Auswerteschaltung (11) aus der Zeitdifferenz zwischen dem direkten Empfang des Schallsignals und dem Empfang des Schallsignals nach Reflektion an dem ungedämpften Ende des Schallsignalleiters (3) durch den Signalauskoppler (10) die Position des Signaleinkopplers (9) zur Lage des Signalauskopplers (10) bestimmt.

## Beschreibung

Die Erfindung betrifft eine Einrichtung zur Positionserfassung nach dem Oberbegriff des Anspruchs 1.

Aus EP-A-1 065 517 ist eine Einrichtung zur Positionserfassung eines längs eines vertikalen Schachtes beweglichen Aufzugkorbs mit einem im Schacht lotrecht gespannten Schallsignalleiter mit vorbestimmter, im wesentlichen gleichmäßiger Schallausbreitungsgeschwindigkeit sowie mit einem mit einem Signalgeber verbundenen, an dem Aufzugkorb befindlichen Signaleinkoppler zum Einkoppeln eines Schallsignals in den Schallsignalleiter bekannt. Hierbei ist benachbart zu wenigstens einem Ende des Schallsignalleiters ein Signalauskoppler angeordnet, der mit einer Auswerteschaltung zur Erzeugung eines für die momentane Position des Aufzugkorbs repräsentativem Signal verbunden ist. Der Schallsignalleiter kann zumindest an einem Ende einen Schallsignaldämpfer aufweisen. Der Signaleinkoppler ist hierbei durch die Auswerteschaltung in Zeitabständen triggerbar, die so groß sind, daß keine Überlagerungen mit vorherigen, vom Signaleinkoppler eingekoppelten und anschließend an den Enden des Schallsignalleiters reflektierten Schallsignalen auftreten. Hierbei wird jedoch eine Kommunikation zwischen dem Signaleinkoppler und der Auswerteschaltung und damit zwischen einem Sender und einem Empfänger benötigt, die durch Störungen beeinträchtigt werden kann.

Aus US-A-4 238 844 ist es bekannt, zur Detektion einer Position eines längs eines drahtförmigen Schalleiters verfahrbaren Signalgebers dessen Position aus den Zeiten zu bestimmen, die ein Schallsignal braucht, um vom Signalgeber direkt zu einem am Ende des Schalleiters befindlichen Signalfühler zu laufen, und die es braucht, um zum anderen Ende des Schalleiters und von dort nach Reflexion zurück zum Signalfühler zu laufen. Da Zeitlängensignale erzeugt werden, ergibt sich eine Kommunikation zwischen Signalgeber und Auswerteschaltung, welche in Form eines elektrischen Signals über den Schalleiter zum Signalgeber geführt wird. Hierbei wird das elektrische Signal zum Erzeugen des Schallsignals am Ort des Signalgebers und zum Setzen der Auswerteschaltung verwendet.

Aufgabe der Erfindung ist es, eine Einrichtung nach dem Oberbegriff des Anspruchs 1 zu schaffen, die es ermöglicht, auf eine Kommunikation zwischen dem Signaleinkoppler und der Auswerteschaltung zu verzichten.

Diese Aufgabe wird entsprechend dem kennzeichnenden Teil des Anspruchs 1 gelöst.

Dadurch, daß ein einen eigenen Taktgenerator umfassender Signalgeber mit zugehörigem Signaleinkoppler am Aufzugkorb durch dessen Energieversorgung versorgt sind und eine Auswerteschaltung aus der Zeitdifferenz zwischen dem direkten Empfang des Schallsignals und dem Empfang des Schallsignals nach Reflektion an einem praktisch ungedämpften Ende des Schallsignalleiters durch einen benachbart zu einem Ende des Schallsignalleiters angeordneten Signalauskoppler die Position des Signaleinkopplers zur Lage des Signalauskopplers bestimmt, ist es möglich auf eine Kommunikation zwischen Signaleinkoppler und Auswerteschaltung zu verzichten.

Weitere Ausgestaltungen der Erfindung sind der nachfolgenden Beschreibung und den Unteransprüchen zu entnehmen.

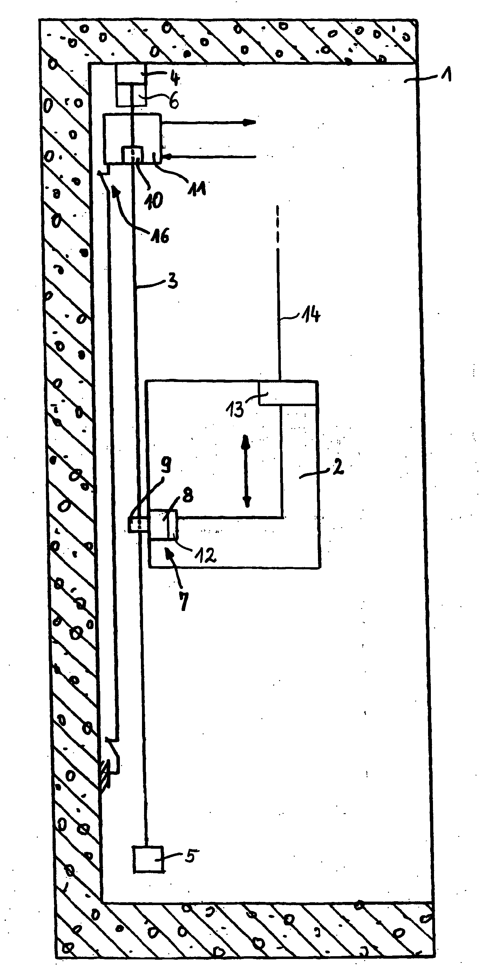

Die Erfindung wird nachstehend anhand von in der beigefügten Abbildung schematisch dargestellten Ausführungsbeispielen näher erläutert.

In einem Schacht 1 ist ein (nicht im einzelnen dargestellter) in diesem vertikal verfahrbarer Aufzug mit einem Aufzugkorb 2 vorgesehen. Außerdem befindet sich in dem Schacht 1 ein Schallsignalleiter 3, der über eine Aufhängung 4 mit seinem oberen Ende am Schachtkopf mechanisch befestigt ist, während er an seinem unteren Ende durch eine Einspannung 5 eingespannt ist, so daß sich der Schallsignalleiter 3 im wesentlichen über die Höhe des Schachtes 1 erstreckt und lotrecht im Schacht 1 gehalten ist. Bei der Einspannung 5 kann es sich auch um ein Gewicht handeln. Benachbart zur Aufhängung 4 oder als Teil hiervon ausgebildet ist ein Schallsignaldämpfer 6 am oberen Ende des Schallsignalleiters 3 angeordnet.

Der metallische, magnetostriktive Schallsignalleiter 3 besitzt eine vorbestimmte, im wesentlichen gleichmäßige Schallausbreitungsgeschwindigkeit und ist insbesondere ein Metalldraht, der zweckmäßigerweise einen Durchmesser in der Größenordnung von etwa 1 mm besitzt.

Der Aufzugkorb 2 ist mit einer Sendeeinheit 7 für ein Schallsignal im Ultraschallbereich versehen, die einen einen Taktgenerator umfassenden Signalgeber 8 und einen am Aufzugkorb 2 befindlichen Signaleinkoppler 9 zum Einkoppeln des Schallsignals in den Schallsignalleiter 3 aufweist. Ein von letzterem eingekoppeltes Schallsignal breitet-sich zu beiden Enden des Schallsignalleiters 3 hin aus und wird - beim dargestellten Ausführungsbeispiel - am unteren Ende an der Einspannung 5 reflektiert und im wesentlichen nicht gedämpft sowie beim Durchlaufen des Schallsignaldämpfers 6 oder mehrmaligen Durchlaufen des Schallsignalleiters 3 durch diesen so stark gedämpft, daß ein am oberen Ende des Schallsignalleiters 3 reflektiertes Signal nicht mehr verwertbar ist.

Benachbart zu einem Ende des Schallsignalleiters 3, dargestellt benachbart zum oberen Ende, ist ein Signalauskoppler 10 vorgesehen, der mit einer Auswerteschaltung 11 zur Erzeugung eines für die momentane Position des Aufzugkorbs 2 repräsentativem Signal verbunden ist.

Die Auswerteschaltung 11, die vorzugsweise auch einen Mikroprozessor umfaßt, dient dazu, die Schallaufzeitmessung und die Positionsberechnung des Aufzugkorbs 2 durchzuführen sowie die Ausgabe der Position des Aufzugkorbs 2 gegebenenfalls mit extrapolierten Zwischenpositionen zwischen den tatsächlich gemessenen auszugeben.

Der Signaleinkoppler 9 umfaßt eine Energieversorgungseinheit 12, etwa ein Transformator mit angeschaltetem Netzteil, die ihre Energie von einer Energieversorgungseinheit 13 des Aufzugskorbs 2 bezieht, wobei der Aufzugskorbs 2 in üblicher Weise über ein Schleppkabel 14 energieversorgt ist.

Wenn der Signaleinkoppler 9 zu einem Zeitpunkt T1 ein impulsartiges Schallsignal in den Schallsignalleiter 3 einkoppelt, läuft die daraus entstehende Schockwelle entsprechend der Schallausbreitungsgeschwindigkeit des Schallsignalleiters 3 in beide Richtungen und wird einerseits vom Schallsignalauskoppler 10 direkt zu einem Zeitpunkt T2 und andererseits zu einem Zeitpunkt T3 indirekt, d.h. nach Reflexion am ungedämpften Ende des Schallsignalleiters 3 empfangen. Infolge des Schallsignaldämpfers 6 erscheinen keine weiteren verwertbaren Schallsignale aus der Einkopplung am Schallsignalauskoppler 10. Aus der Differenz von T2 und T3 ergibt sich ein Meßwert für die Lage des Signaleinkopplers 9 zum Signalauskoppler 10.

Um Überlagerungen von aufeinander folgend eingekoppelten Schallwellen zu vermeiden, kann die Taktfrequenz des Taktgenerators des Schallsignalgebers 8 zeitlich so gewählt werden, daß der zeitliche Abstand einem zweimaligen vollständigen Durchlaufen des Schallsignalleiters 3 entspricht oder diesen übersteigt. Entsprechend der vorgesehenen Ortsauflösung und der festliegenden Schallausbreitungs-geschwindigkeit im Schallsignalleiter 3 von ca. 4700 m/s wird dadurch allerdings die Förderhöhe des Aufzugs, für die eine konstante Taktfrequenz anwendbar ist, beschränkt.

Durch den Schallsignaldämpfer 6 wird erreicht, daß die Schallwellenenergie infolge entsprechender Dämpfung so gering wird, daß ein hierdurch verursachter Fehler infolge Überlagerung der verbliebenen Restwelle mit einer neu eingekoppelten Schallwelle nicht mehr berücksichtigt werden muß. (Eine Restwelle wird beispielsweise dann nicht mehr als störend angesehen, wenn ihre Schallwellenenergie unter etwa 10%, vorzugsweise unter etwa 5% ihres ursprünglichen Wertes gesunken ist.)

Um eventuelle Störsignale, die auch aus anderen Quellen stammen können, auszuschalten, kann auch vorgesehen sein, mittels der Auswerteschaltung 11 entsprechend der Position des Aufzugkorbs 2, die durch Auswertung des vom Signalauskoppler 10 empfangenen Signals berechnet wurde, ein relativ enges Zeitfenster zu bestimmen, in dem das erneut, d.h. das zuletzt eingekoppelte Schallsignal am Signalauskoppler 10 zu erwarten ist, wobei der Signalauskoppler 10 nur während des Zeitfensters aktiviert ist. Hierdurch werden außerhalb des Zeitfensters ankommende Störsignale ausgeblendet.

Das Zeitfenster kann beim Einschalten der Einrichtung relativ groß gewählt und im Rahmen nachfolgender Positionsbestimmungen immer mehr eingeengt werden, so daß es schließlich beispielsweise auf etwa die vier- bis achtfache Impulsbreite der Schallsignale eingeengt ist.

Im Schacht 1 kann mindestens ein Schalter 16 vorgesehen sein, der beim Überfahren durch den Aufzugkorb 2 betätigt wird und dabei ein Signal an die Auswerteeinheit 11 liefert. Letztere speichert beispielsweise eine Tabelle bezüglich des Punktes des Überfahrens des Schalters 16 bei einer bestimmten Temperatur von beispielsweise 20°C. Die Positionsbestimmung wird dann entsprechend den Abweichungen von dieser Tabelle korrigiert, wodurch Längenänderungen eines den Schacht 1 aufweisenden Gebäudes in ihren Auswirkungen auf die Positionsbestimmung des Aufzugkorbs 2 berücksichtigt werden können.

Der Schalter 16 ist in dem dargestellten Ausführungsbeispiel als Öffner vorgesehen. Möglich ist aber auch eine Parallel- oder Serienschaltung mehrerer Schalter 16. Auch der Einzelanschluß mehrerer Schalter 16 ist möglich.

Die Anordnung Reflektor, Schallsignalleiter 3, Schallsignalauskoppler 10, Schallsignaldämpfer 6 kann auch um 180° gedreht angeordnet sein.

## Patentansprüche

1. Einrichtung zur Positionserfassung eines längs eines vertikalen Schachtes (1) beweglichen, stromversorgten Aufzugkorbs (2), mit einem im Schacht (1) lotrecht gespannten Schallsignalleiter (3) mit vorbestimmter, im wesentlichen gleichmäßiger Schallausbreitungsgeschwindigkeit sowie mit einem mit einem Signalgeber (8) verbundenen, an dem Aufzugkorb (2) befindlichen Signaleinkoppler (9) zum Einkoppeln eines Schallsignals in den Schallsignalleiter (3), wobei benachbart zu einem Ende des Schallsignalleiters (3) ein Signalauskoppler (10) angeordnet ist, der mit einer Auswerteschaltung (11) zur Erzeugung eines für die momentane Position des Aufzugkorbs (2) repräsentativem Signal verbunden ist, und wobei der Schallsignalleiter (3) an einem Ende einen Schallsignaldämpfer (6, 6') aufweist, **dadurch gekennzeichnet, daß** der einen eigenen Taktgenerator umfassende Signalgeber (8) und der Signaleinkoppler (9) durch die Energieversorgung (13) des Aufzugkorbs (2) energieversorgt sind und die Auswerteschaltung (11) aus der Zeitdifferenz zwischen dem direkten Empfang des Schallsignals und dem Empfang des Schallsignals nach Reflektion an dem ungedämpften Ende des Schallsignalleiters (3) durch den Signalauskoppler (10) die Position des Signaleinkopplers (9) zur Lage des Signalauskopplers (10) bestimmt.

2. Einrichtung nach Anspruch 1, **dadurch gekennzeichnet, daß** der Takt des Taktgenerators so groß ist, daß der Zeitabstand zwischen aufeinanderfolgenden Schallsignalen etwa der zweimaligen Durchlaufzeit des Schallsignals durch den Schallsignalleiter (3) entspricht.

3. Einrichtung nach Anspruch 1, **dadurch gekennzeichnet, daß** der Signalgeber (8) periodisch aufeinanderfolgende Taktsignale unterschiedlich kodiert, so daß mindestens innerhalb einer zweimaligen Durchlaufzeit des Schallsignals durch den Schallsignalleiter (3) kein Schallsignal mit gleicher Kodierung auftritt.

4. Einrichtung nach einem der Ansprüche 1 bis 3, **dadurch gekennzeichnet, daß** mindestens ein im Schacht (1) fest angeordneter, vom Aufzugkorb (2) bei dessen Verfahren betätigbarer Schalter (16) vorgesehen ist, dessen Positionen kontinuierlich in der Auswerteschaltung (11) gespeichert und zur Eichung der Positionsbestimmung verwendet wird.
